# EUROPEAN PATENT SPECIFICATION

(11) **EP 4 074 958 B1**
(45) Date of publication and mention of the grant of the patent: **02.04.2025**
(21) Application number: 22162865.4
(22) Date of filing: 18.03.2022
(51) Int. Cl.: F02N 11/08, B60R 16/03, B62J 45/00, F02N 11/10, B62M 7/00

(54) **OPERATION STOP CONTROL DEVICE, ELECTRICAL SYSTEM FOR STRADDLE-TYPE VEHICLE, AND SWITCH DISCRIMINATION METHOD**
BETRIEBSSTOPPSTEUERUNGSVORRICHTUNG, ELEKTRISCHES SYSTEM FÜR EIN SATTELFAHRZEUG UND VERFAHREN ZUR SCHALTERUNTERSCHEIDUNG
DISPOSITIF DE COMMANDE D'ARRÊT DE FONCTIONNEMENT, SYSTÈME ÉLECTRIQUE POUR VÉHICULE DE TYPE À ENFOURCHER ET PROCÉDÉ DE DISCRIMINATION DE COMMUTATION

(30) Priority: 25.03.2021 JP 2021051926
(43) Date of publication of application: 19.10.2022
(73) Proprietor: Suzuki Motor Corporation, Hamamatsu-shi, Shizuoka 432-8611 (JP)
(72) Inventor: KINOSHITA, Akihiro, Hamamatsu-shi, Shizuoka, 432-8611 (JP)
(74) Representative: Haseltine Lake Kempner LLP

(56) References cited:
- EP-A2- 1 612 409
- EP-B1- 2 538 062
- JP-A- 2000 154 754
- JP-A- 2004 293 733
- US-A- 5 218 941
- US-A1- 2005 080 526

## Description

### TECHNICAL FIELD

The present invention relates to an operation stop control device and an electrical system for a straddle-type vehicle having a function of stopping an operation of a control device that performs control related to a straddle-type vehicle, and a switch discrimination method that discriminates between an ignition switch being OFF and a kill switch being OFF.

### BACKGROUND ART

A straddle-type vehicle is provided with an engine control module or electronic control module (ECM) as a control device that performs control related to the straddle-type vehicle. The ECM includes a normal power supply terminal and a constant power supply terminal. A normal power supply voltage is supplied from a battery to the normal power supply terminal. A constant power supply voltage is supplied from the battery to the constant power supply terminal.

An ignition switch is provided in the straddle-type vehicle. The ignition switch is a switch that switches ON and OFF of supply of the normal power supply voltage from the battery to the ECM. The normal power supply voltage is supplied to the ECM when the ignition switch is turned on, and is not supplied to the ECM when the ignition switch is turned off. On the other hand, the constant power supply voltage is constantly supplied to the ECM.

The ECM operates by the normal power supply voltage when the ignition switch is turned on. When the ignition switch is turned off, the ECM can operate by the constant power supply voltage. For example, the ECM may perform a processing of stopping an engine and an operation end processing of ending an operation of the ECM itself by the constant power supply voltage after the ignition switch is turned off.

A kill switch is provided in the straddle-type vehicle. The kill switch is a switch that stops the engine in an emergency. A user (for example, an operator) of the straddle-type vehicle can stop the engine by operating the kill switch while the engine is operating. Generally, the kill switch is provided on a path connecting the battery and the ECM. While the engine is operating, the kill switch is turned on, and a voltage is supplied from the battery to the ECM via the kill switch being in an ON state. When the kill switch is turned off, the path connecting the battery and the ECM is disconnected by the kill switch turned off, supply of the voltage from the battery to the ECM is stopped, and the ECM stops the engine accordingly. It is a general feeling of the user that the kill switch is OFF while the engine is operating and that the kill switch is ON when the engine is stopped, but it should be noted that in an electrical operation of the kill switch (a state of a contact point of the kill switch), turning the kill switch on and off is opposite of the general feeling of the user.

A connection configuration of the ignition switch and the kill switch to the ECM includes following two types of configurations. A first connection configuration is a configuration in which the ignition switch and the kill switch are connected between the battery and the normal power supply terminal of the ECM in series to each other. In the first connection configuration, when the ignition switch is turned on in a state where the kill switch is ON, the normal power supply voltage is supplied from the battery to the normal power supply terminal of the ECM. The ECM starts an operation when the normal power supply voltage is supplied to the normal power supply terminal. In the first connection configuration, when either the ignition switch or the kill switch is turned off, the normal power supply voltage is not supplied from the battery to the normal power supply terminal of the ECM. When the normal power supply voltage is not supplied to the normal power supply terminal, in a case where the engine is operating, the ECM in the related art stops the engine, and then, performs the above operation end processing. After an end of the operation end processing, the ECM stops.

A second connection configuration is a configuration in which the ignition switch is connected between the battery and the normal power supply terminal of the ECM, and the kill switch is connected to a terminal different from the normal power supply terminal, for example, a dedicated terminal for recognizing ON and OFF of the kill switch. In the second connection configuration, regardless of ON or OFF of the kill switch, when the ignition switch is turned on, the normal power supply voltage is supplied from the battery to the normal power supply terminal of the ECM, and the ECM starts the operation. In the second connection configuration, regardless of ON or OFF of the kill switch, when the ignition switch is turned off, a power supply voltage is not supplied from the battery to a power supply terminal of the ECM. When the normal power supply voltage is not supplied to the normal power supply terminal, in the case where the engine is operating, the ECM stops the engine, and then, stops after performing the above operation end processing. In the second connection configuration, the ECM has a function of recognizing ON and OFF of the kill switch. When the ECM recognizes that the kill switch is turned off, the ECM stops the engine. The ECM maintains a state in which the engine is stopped even when an operation of starting the engine is performed by the user while the kill switch is OFF.

On the other hand, the ECM is provided with a failure diagnosis function (on-board diagnosis: OBD), and this failure diagnosis function includes a self-diagnosis function in which the ECM diagnoses a failure by itself. The self-diagnosis function includes a function of counting and recording the number of times of travel of the straddle-type vehicle and the number of times of self-diagnosis. The self-diagnosis function counts the number of times of start of the operation of the ECM or stop of the ECM as the number of times of travel. A failure diagnosis rate (a ratio between the number of times of travel and the number of times of self-diagnosis) can be calculated by the number of times of travel and the number of times of self-diagnosis. The failure diagnosis rate can be used for an evaluation of safety of a vehicle.

Patent Literature 1 below discloses an abnormality detection device for an internal combustion engine provided with a kill switch state detection section that detects ON and OFF of a kill switch.

### CITATION LIST

### PATENT LITERATURE

Patent Literature 1: JP-A-2000-154754

### SUMMARY OF INVENTION

### TECHNICAL PROBLEM

In the ECM having the first connection configuration, it is difficult to discriminate between the ignition switch being OFF and the kill switch being OFF in a structure in which the ignition switch and the kill switch are connected to one terminal (normal power supply terminal) of the ECM in series to each other. The ECM in the related art having the first connection configuration does not discriminate between the ignition switch being OFF and the kill switch being OFF, and is configured to stop in both time when the ignition switch is being OFF and when the kill switch is being OFF. Since the ECM in the related art having the first connection configuration stops not only by the ignition switch turning off but also by the kill switch turning off, turn-off of the kill switch is counted as the number of times of travel in the self-diagnosis function. As a result, the following problems arise.

In the ECM having the second connection configuration, since the ignition switch and the kill switch are respectively connected to different terminals of the ECM, it is easy to discriminate between the ignition switch being OFF and the kill switch being OFF. The ECM having the second connection configuration is often configured to discriminate between the ignition switch being OFF and the kill switch being OFF, stop when the ignition switch is turned off, and perform control to stop the engine without stopping the ECM itself when the kill switch is turned off. Since the ECM having such a configuration does not stop when the kill switch is turned off, the turn-off of the kill switch is not counted as the number of times of travel in the self-diagnosis function. As a result, a count value of the number of times of travel in the ECM in the related art having the first connection configuration is larger than a count value of the number of times of travel in the ECM having the second connection configuration in which the ECM does not stop when the kill switch is turned off by the number of times the kill switch is turned off. Therefore, by performing an operation of turning off the kill switch by the user, a difference occurs in the count value of the number of times of travel between the ECM in the related art having the first connection configuration and the ECM having the second connection configuration in which the ECM does not stop when the kill switch is turned off, and as a result, a difference occurs in the failure diagnosis rate. This means that a variation in the failure diagnosis rate occurs between two ECMs having different connection configurations by an operation of turning off the kill switch by the user. Such variation in the failure diagnosis rate may reduce accuracy or reliability of a safety evaluation of the straddle-type vehicle by the failure diagnosis rate, which is not preferable.

The present invention is made in view of the above problems, for example, and a first object of the present invention is to provide, even when an ignition switch and a kill switch are connected to a common terminal of a control device in series to each other, an operation stop control device and an electrical system for a straddle-type vehicle, which can discriminate between the ignition switch being OFF and the kill switch being OFF, and can prevent an operation of the control device from stopping when the kill switch is turned off in a state where the ignition switch is ON.

A second object of the present invention is to provide, even when an ignition switch and a kill switch are connected to a common terminal of a control device in series to each other, a switch discrimination method which can discriminate between the ignition switch being OFF and the kill switch being OFF.

### SOLUTION TO PROBLEM

The scope of the present invention is defined by the appended claims.

In order to solve the above first problem, an electrical system for a straddle-type vehicle of the present invention includes: a power supply device that outputs a normal power supply voltage and a constant power supply voltage; a control device that includes a normal power supply terminal to which the normal power supply voltage is supplied and a constant power supply terminal to which the constant power supply voltage is supplied, operates by the normal power supply voltage while the normal power supply voltage is supplied to the normal power supply terminal, and that operates by the constant power supply voltage while the normal power supply voltage is not supplied to the normal power supply terminal; an electrical device that operates by the normal power supply voltage while the normal power supply voltage is supplied to the electrical device, that stops while the normal power supply voltage is not supplied to the electrical device, and that outputs a state signal, indicating that the normal power supply voltage is supplied to the electrical device, to the control device while the normal power supply voltage is supplied to the electrical device; a normal power supply circuit that has a first path and a second path connected to the power supply device in parallel to each other, that supplies the normal power supply voltage output from the power supply device to the normal power supply terminal of the control device via the first path, and that supplies the normal power supply voltage output from the power supply device to the electrical device via the second path; a constant power supply circuit that is connected to the power supply device and that supplies the constant power supply voltage output from the power supply device to the constant power supply terminal of the control device; an ignition switch that is provided between the power supply device and the normal power supply circuit, and that switches ON and OFF of supply of the normal power supply voltage supplied from the power supply device to the normal power supply circuit; and a kill switch that is provided in the first path and that turn off supply of the normal power supply voltage supplied from the power supply device to the normal power supply terminal of the control device by disconnecting the first path so that an engine of a straddle-type vehicle stops in an emergency, in which the control device includes: a voltage determination unit that determines whether the normal power supply voltage is supplied to the normal power supply terminal; a state signal determination unit that determines whether the state signal is output from the electrical device; and an operation end processing unit that performs an operation end processing of ending an operation of the control device, and based on determination results by the voltage determination unit and the state signal determination unit, the operation end processing unit performs the operation end processing when the normal power supply voltage is not supplied to the normal power supply terminal and the state signal is not output from the electrical device, and does not perform the operation end processing when the normal power supply voltage is not supplied to the normal power supply terminal and the state signal is output from the electrical device.

In order to solve the above second problem, a switch discrimination method of the present invention that discriminates between an ignition switch being OFF and a kill switch being OFF in an electrical system for a straddle-type vehicle, the electrical system for the straddle-type vehicle including: a power supply device that outputs a normal power supply voltage and a constant power supply voltage; a control device that includes a normal power supply terminal to which the normal power supply voltage is supplied and a constant power supply terminal to which the constant power supply voltage is supplied, that operates by the normal power supply voltage while the normal power supply voltage is supplied to the normal power supply terminal, and that operates by the constant power supply voltage while the normal power supply voltage is not supplied to the normal power supply terminal; an electrical device that operates by the normal power supply voltage while the normal power supply voltage is supplied to the electrical device, that stops while the normal power supply voltage is not supplied to the electrical device, and that outputs a state signal, indicating that the normal power supply voltage is supplied to the electrical device, to the control device while the normal power supply voltage is supplied to the electrical device; a normal power supply circuit that has a first path and a second path connected to the power supply device in parallel to each other, that supplies the normal power supply voltage output from the power supply device to the normal power supply terminal of the control device via the first path, and that supplies the normal power supply voltage output from the power supply device to the electrical device via the second path; a constant power supply circuit that is connected to the power supply device and that supplies the constant power supply voltage output from the power supply device to the constant power supply terminal of the control device; the ignition switch that is provided between the power supply device and the normal power supply circuit, and that switches ON and OFF of supply of the normal power supply voltage supplied from the power supply device to the normal power supply circuit; and the kill switch that is provided in the first path and that turns off supply of the normal power supply voltage supplied from the power supply device to the normal power supply terminal of the control device by disconnecting the first path so that an engine of a straddle-type vehicle stops in an emergency, the switch discrimination method includes: a voltage determination step of determining whether the normal power supply voltage is supplied to the normal power supply terminal; and a state signal determination step of determining whether the state signal is output from the electrical device, and based on determination results in the voltage determination step and the state signal determination step, determining that the ignition switch is turned off when the normal power supply voltage is not supplied to the normal power supply terminal and the state signal is not output from the electrical device, and determining that the kill switch is turned off in a state where the ignition switch is ON when the normal power supply voltage is not supplied to the normal power supply terminal and the state signal is output from the electrical device.

### ADVANTAGEOUS EFFECTS OF INVENTION

According to the operation stop control device and the electrical system for a straddle-type vehicle of the present invention, even when the ignition switch and the kill switch are connected to a common terminal of the control device in series to each other, it is possible to discriminate between the ignition switch being OFF and the kill switch being OFF, and prevent the operation of the control device from stopping when the kill switch is turned off in a state where the ignition switch is ON. According to the switch discrimination method of the present invention, even when an ignition switch and a kill switch are connected to a common terminal of a control device in series to each other, it is possible to discriminate between the ignition switch being OFF and the kill switch being OFF.

### BRIEF DESCRIPTION OF DRAWINGS

Fig. 1 is a block diagram showing a configuration of an electrical system for a straddle-type vehicle according to an embodiment of the present invention including an operation stop control device according to the embodiment of the present invention.
Fig. 2 is a block diagram showing a configuration of an electrical system for a straddle-type vehicle according to an Example of the present invention including an operation stop control device according to the Example of the present invention.
Fig. 3 is a diagram showing an ignition switch, a kill switch, and the like.
Fig. 4 is a flowchart showing an operation stop control processing in the operation stop control device according to the Example of the present invention.

### DESCRIPTION OF EMBODIMENTS

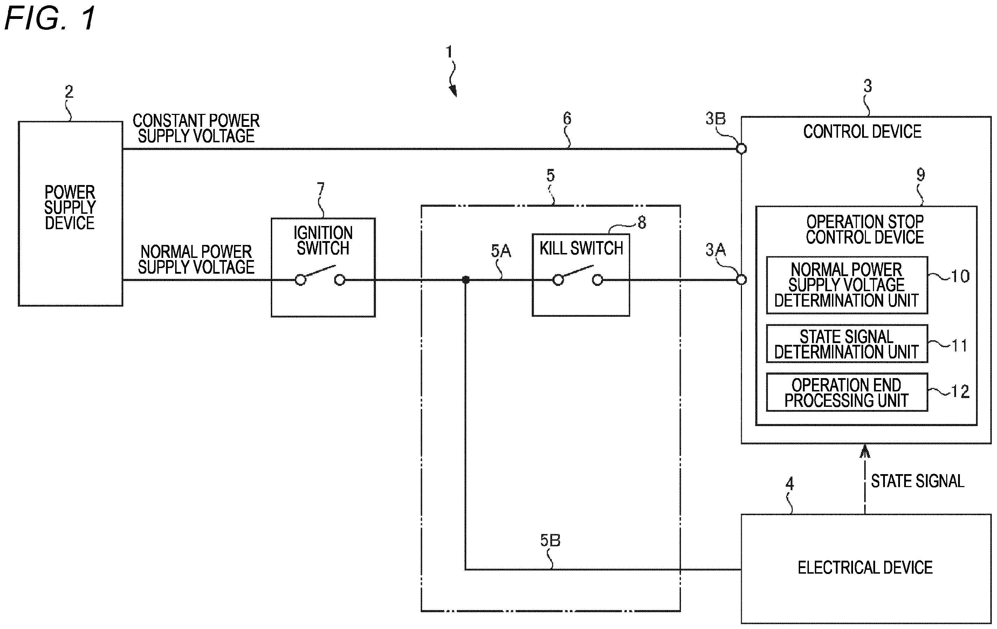

Fig. 1 shows a configuration of an electrical system for a straddle-type vehicle 1 according to an embodiment of the present invention including an operation stop control device 9 according to the embodiment of the present invention. The electrical system for a straddle-type vehicle 1 is provided in a straddle-type vehicle. As shown in Fig. 1, the electrical system for a straddle-type vehicle 1 includes a power supply device 2, a control device 3, an electrical device 4, a normal power supply voltage supply circuit (normal power supply circuit) 5, a constant power supply voltage supply circuit (constant power supply circuit) 6, an ignition switch 7, and a kill switch 8. The control device 3 is provided with an operation stop control device 9.

The power supply device 2 outputs a normal power supply voltage and a constant power supply voltage.

The control device 3 is a device that performs control related to the straddle-type vehicle. The control device 3 includes a normal power supply terminal 3A to which the normal power supply voltage is supplied and a constant power supply terminal 3B to which the constant power supply voltage is supplied. The control device 3 can operate by the normal power supply voltage while the normal power supply voltage is supplied to the normal power supply terminal 3A, and can operate by the constant power supply voltage while the normal power supply voltage is not supplied to the normal power supply terminal 3A.

The normal power supply voltage is supplied to the electrical device 4. The electrical device 4 operates by the normal power supply voltage while the normal power supply voltage is supplied to the electrical device 4, and stops while the normal power supply voltage is not supplied to the electrical device 4. The electrical device 4 outputs a state signal, indicating that the normal power supply voltage is supplied to the electrical device 4, to the control device 3 while the normal power supply voltage is supplied to the electrical device 4.

The normal power supply voltage supply circuit 5 has a first path 5A and a second path 5B connected to the power supply device 2 in parallel to each other, and supplies the normal power supply voltage output from the power supply device 2 via the first path 5A to the normal power supply terminal 3A of the control device 3, and supplies the normal power supply voltage output from the power supply device 2 via the second path 5B to the electrical device 4.

The constant power supply voltage supply circuit 6 is a circuit that is connected to the power supply device 2 and supplies the constant power supply voltage output from the power supply device 2 to the constant power supply terminal 3B of the control device 3.

The ignition switch 7 is provided between the power supply device 2 and the normal power supply voltage supply circuit 5, and is a switch that switches ON and OFF of supply of the normal power supply voltage from the power supply device 2 to the normal power supply voltage supply circuit 5.

The kill switch 8 is a switch that is provided in the first path 5A and is a switch that turns off the supply of the normal power supply voltage from the power supply device 2 to the normal power supply terminal 3A of the control device 3 by disconnecting the first path 5A in order to stop an engine of the straddle-type vehicle in an emergency.

The operation stop control device 9 is a device that stops the control device 3 when the ignition switch 7 is turned off. The operation stop control device 9 includes a normal power supply voltage determination unit (voltage determination unit) 10, a state signal determination unit 11, and an operation end processing unit 12. The normal power supply voltage determination unit 10 determines whether the normal power supply voltage is supplied to the normal power supply terminal 3A. The state signal determination unit 11 determines whether the state signal is output from the electrical device 4. Based on determination results by the normal power supply voltage determination unit 10 and the state signal determination unit 11, the operation end processing unit 12 performs an operation end processing when the normal power supply voltage is not supplied to the normal power supply terminal 3A and the state signal is not output from the electrical device 4, and does not perform the operation end processing when the normal power supply voltage is not supplied to the normal power supply terminal 3A and the state signal is output from the electrical device 4. The operation end processing is a processing of ending an operation of the control device 3.

In the electrical system for a straddle-type vehicle 1 according to the present embodiment having such a configuration, when a user of the straddle-type vehicle turns the ignition switch 7 from OFF to ON in a state where the kill switch 8 is ON, the normal power supply voltage output from the power supply device 2 is supplied via the first path 5A of the normal power supply voltage supply circuit 5 to the normal power supply terminal 3A of the control device 3. When the normal power supply voltage is supplied to the normal power supply terminal 3A, the control device 3 starts the operation by the normal power supply voltage. At the same time, the normal power supply voltage output from the power supply device 2 is supplied via the second path 5B of the normal power supply voltage supply circuit 5 to the electrical device 4. When the normal power supply voltage is supplied to the electrical device 4, the electrical device 4 starts an operation. When the electrical device 4 starts the operation, the electrical device 4 outputs the state signal to the control device 3.

When the user turns off the ignition switch 7 in a state where both the ignition switch 7 and the kill switch 8 are ON, the power supply device 2 and the normal power supply voltage supply circuit 5 are disconnected by the ignition switch 7. As a result, the normal power supply voltage is not supplied to the normal power supply terminal 3A of the control device 3 and the electrical device 4. When the normal power supply voltage is not supplied to the normal power supply terminal 3A, the control device 3 uses the constant power supply voltage to continue the operation. When the normal power supply voltage is not supplied to the electrical device 4, the electrical device 4 stops. When the electrical device 4 stops, the state signal is not output from the electrical device 4 to the control device 3.

During the operation of the control device 3, the normal power supply voltage determination unit 10 of the operation stop control device 9 monitors a voltage of the normal power supply terminal 3A. When the normal power supply voltage is not supplied to the normal power supply terminal 3A by turning off the ignition switch 7, the normal power supply voltage determination unit 10 determines that the normal power supply voltage is not supplied to the normal power supply terminal 3A. Then, the state signal determination unit 11 of the operation stop control device 9 determines whether the state signal is output from the electrical device 4. When the ignition switch 7 is turned off, the normal power supply voltage is not supplied to the electrical device 4, and the state signal is not output from the electrical device 4. In this case, the state signal determination unit 11 determines that the state signal is not output from the electrical device 4. When the normal power supply voltage determination unit 10 and the state signal determination unit 11 determine in this way, the operation end processing unit 12 of the operation stop control device 9 performs the above operation end processing. After an end of the operation end processing, the control device 3 stops.

When the user turns off the kill switch 8 in the state where both the ignition switch 7 and the kill switch 8 are ON, the power supply device 2 and the normal power supply terminal 3A of the control device 3 are disconnected by the kill switch 8. As a result, the normal power supply voltage is not supplied to the normal power supply terminal 3A of the control device 3. When the normal power supply voltage is not supplied to the normal power supply terminal 3A, the control device 3 uses the constant power supply voltage to continue the operation. On the other hand, even when the kill switch 8 is turned off, since the ignition switch 7 is in an ON state, supply of the normal power supply voltage to the electrical device 4 is continued. Therefore, the electrical device 4 continues the operation, and an output of the state signal from the electrical device 4 to the control device 3 is also continued.

When the normal power supply voltage is not supplied to the normal power supply terminal 3A by turning off the kill switch 8, the normal power supply voltage determination unit 10 determines that the normal power supply voltage is not supplied to the normal power supply terminal 3A. Then, the state signal determination unit 11 determines whether the state signal is output from the electrical device 4. Even when the kill switch 8 is turned off, since the state signal is output from the electrical device 4 when the ignition switch 7 is in the ON state, the state signal determination unit 11 determines that the state signal is output from the electrical device 4. When the normal power supply voltage determination unit 10 and the state signal determination unit 11 determine in this way, the operation end processing unit 12 does not perform the above operation end processing. As a result of not performing the operation end processing, the control device 3 does not stop, and continues the operation. For example, after the kill switch 8 is turned off, the control device 3 performs a processing of monitoring a state of the kill switch 8.

As described above, in the electrical system for a straddle-type vehicle 1, when the ignition switch 7 is turned off, the normal power supply voltage is not supplied to the normal power supply terminal 3A, and the state signal is not output from the electrical device 4. When the normal power supply voltage is not supplied to the normal power supply terminal 3A and the state signal is not output from the electrical device 4, the operation stop control device 9 performs the operation end processing to stop the control device 3. That is, the operation stop control device 9 stops the control device 3 when the ignition switch 7 is turned off. When the kill switch 8 is turned off in a state where the ignition switch 7 is ON, the normal power supply voltage is not supplied to the normal power supply terminal 3A, but the output of the state signal from the electrical device 4 is continued. When the normal power supply voltage is not supplied to the normal power supply terminal 3A and the state signal is output from the electrical device 4, the operation stop control device 9 does not perform the operation end processing and does not stop the control device 3. That is, when the kill switch 8 is turned off in the state where the ignition switch 7 is ON, the operation stop control device 9 does not stop the control device 3. Thus, according to the operation stop control device 9, it is possible to discriminate between the ignition switch 7 being OFF and the kill switch 8 being OFF, and it is possible to stop the control device 3 when the ignition switch 7 is turned off, and not to stop the operation of the control device 3 when the kill switch 8 is turned off in the state where the ignition switch 7 is ON.

As shown in Fig. 1, in the electrical system for a straddle-type vehicle 1 according to the present embodiment, the ignition switch 7 and the kill switch 8 are connected between the power supply device 2 and the normal power supply terminal 3A of the control device 3 in series to each other. That is, the ignition switch 7 and the kill switch 8 are connected to a common terminal of the control device 3 in series to the each other. According to the electrical system for a straddle-type vehicle 1 or the operation stop control device 9 according to the present embodiment, thus, even in a configuration in which the ignition switch 7 and the kill switch 8 are connected to the common terminal of the control device 3 in series to the each other, it is possible to discriminate between the ignition switch 7 being OFF and the kill switch 8 being OFF by the normal power supply voltage determination unit 10, the state signal determination unit 11, and the operation end processing unit 12. And it is possible to stop the control device 3 when the ignition switch 7 is turned off, and not to stop the operation of the control device 3 when the kill switch 8 is turned off in the state where the ignition switch 7 is ON by the normal power supply voltage determination unit 10, the state signal determination unit 11, and the operation end processing unit 12.

### [Example]

### (Configuration of Electrical System for Straddle-Type Vehicle)

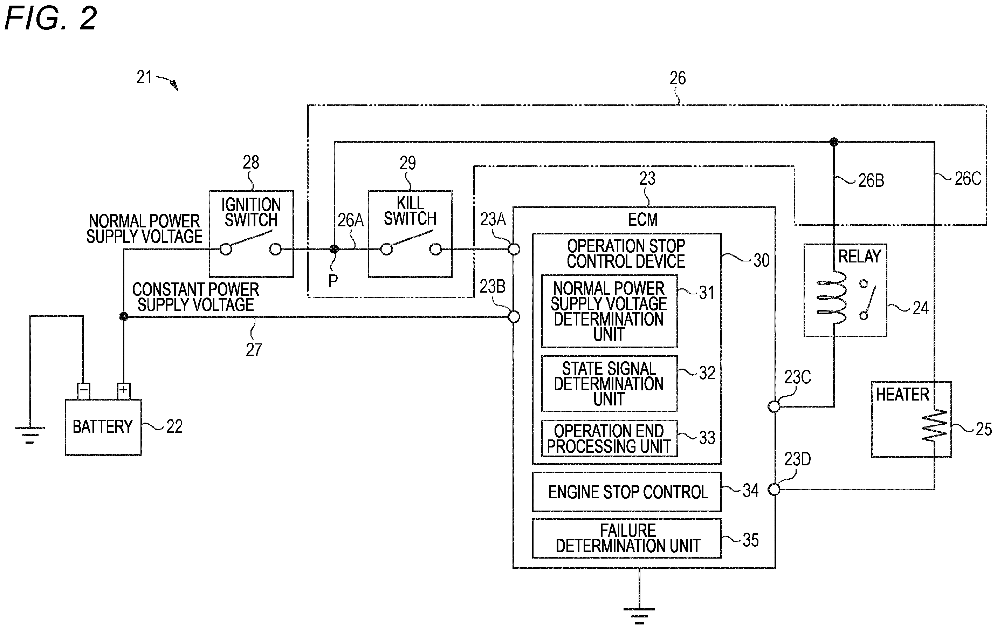

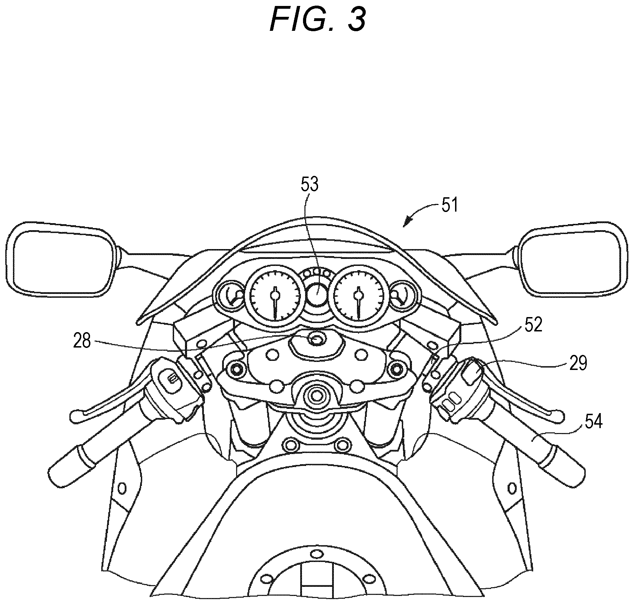

Fig. 2 shows a configuration of an electrical system for a straddle-type vehicle 21 according to the Example of the present invention including an operation stop control device 30 according to the Example of the present invention. Fig. 3 shows a periphery of a handle 52 in a front portion of a straddle-type vehicle 51 provided with the electrical system for a straddle-type vehicle 21. As shown in Fig. 2, the electrical system for a straddle-type vehicle 21 includes a battery 22 as a power supply device, an ECM 23 as a control device, a relay 24 as an electrical device, a heater 25 as another electrical device, a normal power supply voltage supply circuit (normal power supply circuit) 26, a constant power supply voltage supply circuit (constant power supply circuit) 27, an ignition switch 28, and a kill switch 29. The operation stop control device 30 is provided in the ECM 23.

The battery 22 outputs a DC power supply voltage. Specifically, the battery 22 supplies a normal power supply voltage to a normal power supply terminal 23A of the ECM 23, the relay 24, and the heater 25, and supplies a constant power supply voltage to a constant power supply terminal 23B of the ECM 23.

The ECM 23 is a device that performs control related to the straddle-type vehicle 51, and includes a central processing unit (CPU), a memory, and the like. The ECM 23 mainly performs control related to an operation of an engine of the straddle-type vehicle 51, for example, opening and closing control of a throttle valve, fuel injection control of a fuel injection device, and the like. The ECM 23 includes the normal power supply terminal 23A to which the normal power supply voltage is supplied and the constant power supply terminal 23B to which the constant power supply voltage is supplied. The ECM 23 can operate by the normal power supply voltage while the normal power supply voltage is supplied to the normal power supply terminal 23A, and can operate by the constant power supply voltage while the normal power supply voltage is not supplied to the normal power supply terminal 23A. The ECM 23 has state detection terminals 23C and 23D that detect states of the relay 24 and the heater 25.

The relay 24 is, for example, a relay that switches between an operation and a stop of a cooling fan of a radiator provided in the straddle-type vehicle 51. The heater 25 is, for example, a heater that heats a sensor element such as zirconia provided in an oxygen sensor that measures an oxygen concentration in exhaust gas of the engine. The normal power supply voltage is supplied to the relay 24 and the heater 25. The relay 24 and the heater 25 operate by the normal power supply voltage while the normal power supply voltage is supplied to the relay 24 and the heater 25, and stop while the normal power supply voltage is not supplied the relay 24 and the heater 25. While the normal power supply voltage is supplied to the relay 24, the relay 24 outputs a state signal indicating that the normal power supply voltage is supplied to the relay 24 to the state detection terminal 23C of the ECM 23. Similarly, while the normal power supply voltage is supplied to the heater 25, the heater 25 outputs a state signal indicating that the normal power supply voltage is supplied to the heater 25 to the state detection terminal 23D of the ECM 23. Failure detection signals output from the relay 24 and the heater 25 to the ECM 23 in order to perform a failure detection of each of the relay 24 and the heater 25 by the ECM 23 can be used as a state signal.

The normal power supply voltage supply circuit 26 supplies the normal power supply voltage from the battery 22 to the normal power supply terminal 23A of the ECM 23, the relay 24, and the heater 25. The normal power supply voltage supply circuit 26 includes a first path 26A, a second path 26B, and a third path 26C that are connected to the battery 22 in parallel to each other. In a present example, the first path 26A is a path connecting a branch point P connected to the battery 22 and the normal power supply terminal 23A of the ECM 23. The normal power supply voltage output from the battery 22 is supplied via the first path 26A to the normal power supply terminal 23A of the ECM 23. The second path 26B is a path connecting the branch point P connected to the battery 22 and the relay 24. The normal power supply voltage output from the battery 22 is supplied via the second path 26B to the relay 24. The third path 26C is a path connecting the branch point P connected to the battery 22 and the heater 25. The normal power supply voltage output from the battery 22 is supplied via the third path 26C to the heater 25.

The constant power supply voltage supply circuit 27 is a circuit that connects the battery 22 and the constant power supply terminal 23B of the ECM 23, and supplies a constant power supply voltage from the battery 22 to the constant power supply terminal 23B of the ECM 23.

The ignition switch 28 is a switch that switches ON and OFF of supply of the normal power supply voltage from the battery 22 to the normal power supply voltage supply circuit 26. The ignition switch 28 is provided between the battery 22 and the normal power supply voltage supply circuit 26. Specifically, the ignition switch 28 is provided between the battery 22 and the branch point P.

The kill switch 29 is a switch that turns off the supply of the normal power supply voltage from the battery 22 to the normal power supply terminal 23A of the ECM 23 by disconnecting the first path 26A in order to stop the engine of the straddle-type vehicle 51 in an emergency. The kill switch 29 is provided in the first path 26A. That is, the kill switch 29 is provided between the branch point P and the normal power supply terminal 23A.

As can be seen from Fig. 2, the ignition switch 28 and the kill switch 29 are connected in a path connecting the battery 22 and the normal power supply terminal 23A in series to each other. The kill switch 29 is connected in a downstream side of the ignition switch 28 in the path connecting the battery 22 and the normal power supply terminal 23A, and the branch point P is positioned between the ignition switch 28 and the kill switch 29.

As shown in Fig. 3, the ignition switch 28 is disposed at a center of the front portion of the straddle-type vehicle 51 in a left-right direction and in the vicinity of a rear of a meter 53. The kill switch 29 is an end side portion on an outer side in the left-right direction of the handle 52 and is disposed in the vicinity of a grip 54.

### (Configuration of Operation Stop Control Device)

The operation stop control device 30 is a device that stops an operation of the ECM 23 when the ignition switch 28 is turned off. As described above, the operation stop control device 30 is provided in the ECM 23. As shown in Fig. 2, the operation stop control device 30 includes a normal power supply voltage determination unit (voltage determination unit) 31, a state signal determination unit 32, and an operation end processing unit 33. Further, the ECM 23 is provided with an engine stop control unit 34 and a failure determination unit 35. The normal power supply voltage determination unit 31, the state signal determination unit 32, and the operation end processing unit 33 of the operation stop control device 30, and the engine stop control unit 34 and the failure determination unit 35 are implemented as functions of the ECM 23 by, for example, reading and executing a computer program stored in the memory of the ECM 23 by the CPU of the ECM 23.

The operation stop control device 30 performs an operation stop control processing to be described later. In the operation stop control processing, the normal power supply voltage determination unit 31 determines whether the normal power supply voltage is supplied to the normal power supply terminal 23A of the ECM 23. The state signal determination unit 32 determines whether a state signal is output from the relay 24 and determines whether a state signal is output from the heater 25. The operation end processing unit 33 performs an operation end processing of ending the operation of the ECM 23. The engine stop control unit 34 stops the engine of the straddle-type vehicle 51. The failure determination unit 35 performs a failure determination of each of the relay 24 and the heater 25.

### (Operation of Electrical System for Straddle-Type Vehicle)

The operation of the electrical system for a straddle-type vehicle 21 is as follows. When the user of the straddle-type vehicle 51 turns on the ignition switch 28 from OFF in a state where the kill switch 29 is ON, the normal power supply voltage output from the battery 22 is supplied via the first path 26A of the normal power supply voltage supply circuit 26 to the normal power supply terminal 23A of the ECM 23. When the normal power supply voltage is supplied to the normal power supply terminal 23A, the ECM 23 starts the operation by the normal power supply voltage. At the same time, the normal power supply voltage output from the battery 22 is supplied via the second path 26B and the third path 26C of the normal power supply voltage supply circuit 26 to the relay 24 and the heater 25 respectively. When the normal power supply voltage is supplied to the relay 24 and the heater 25, the relay 24 and the heater 25 start operations. When the relay 24 starts the operation, the relay 24 outputs a state signal to the state detection terminal 23C of the ECM 23. When the heater 25 starts the operation, the heater 25 outputs a state signal to the state detection terminal 23D of the ECM 23.

When the user turns off the ignition switch 28 in a state where both the ignition switch 28 and the kill switch 29 are ON, the battery 22 and the normal power supply voltage supply circuit 26 are disconnected by the ignition switch 28. As a result, the normal power supply voltage is not supplied to the normal power supply terminal 23A of the ECM 23, the relay 24, and the heater 25. When the normal power supply voltage is not supplied to the normal power supply terminal 23A, the ECM 23 uses the constant power supply voltage to continue the operation. When the normal power supply voltage is not supplied to the relay 24, the relay 24 stops. When the relay 24 stops, the state signal is not output from the relay 24 to the state detection terminal 23C of the ECM 23. When the normal power supply voltage is not supplied to the heater 25, the heater 25 stops. When the heater 25 stops, the state signal is not output from the heater 25 to the state detection terminal 23D of the ECM 23. In the operation stop control processing to be described later, the operation stop control device 30 recognizes such a state when the ignition switch 28 is turned off, and stops the ECM 23.

When the user turns off the kill switch 29 in the state where both the ignition switch 28 and the kill switch 29 are ON, the battery 22 and the normal power supply terminal 23A of the ECM 23 are disconnected by the kill switch 29. As a result, the normal power supply voltage is not supplied to the normal power supply terminal 23A of the ECM 23. When the normal power supply voltage is not supplied to the normal power supply terminal 23A, the ECM 23 uses the constant power supply voltage to continue the operation. On the other hand, even when the kill switch 29 is turned off, since the ignition switch 28 is in an ON state, supply of the normal power supply voltage to the relay 24 and the heater 25 is continued. Therefore, the relay 24 and the heater 25 continue the operations. An output of the state signal from the relay 24 to the state detection terminal 23C of the ECM 23 and an output of the state signal from the heater 25 to the state detection terminal 23D of the ECM 23 are continued. In the operation stop control processing to be described later, the operation stop control device 30 recognizes such a state where the kill switch 29 is turned off in a state where the ignition switch 28 is ON, and continues the operation of the ECM 23 without stopping the ECM 23.

### (Operation Stop Control Processing)

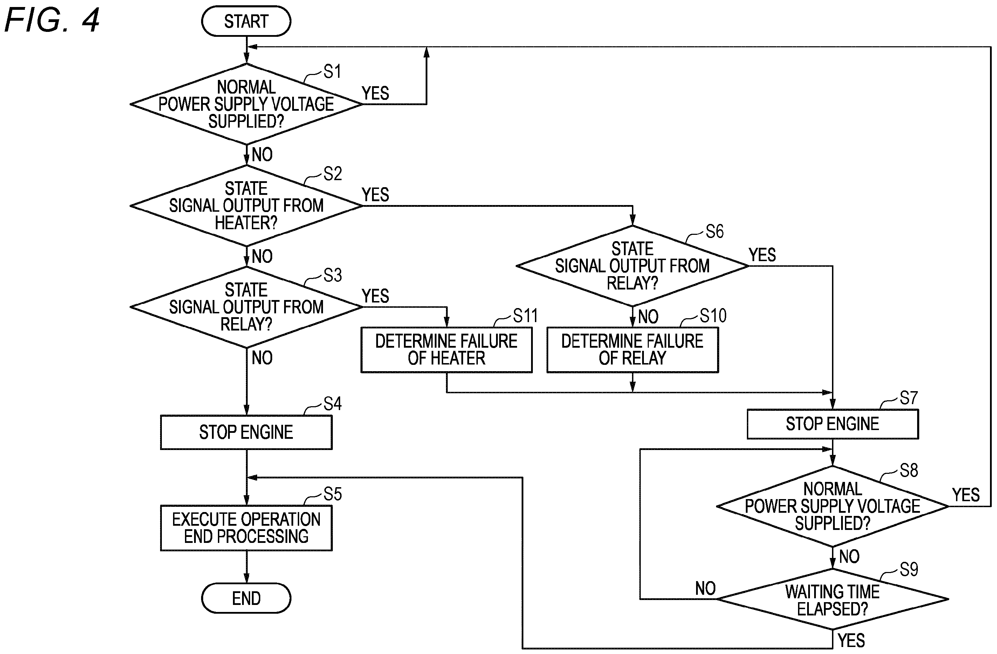

Fig. 4 shows contents of the operation stop control processing in the operation stop control device 30. The operation stop control processing is executed during the operation of the ECM 23. Hereinafter, with reference to Fig. 4, (1) a flow of the operation stop control processing when the ignition switch 28 is turned off in the state where the kill switch 29 is ON, (2) a flow of the operation stop control processing when the kill switch 29 is turned off in the state where the ignition switch 28 is ON when the relay 24 and the heater 25 do not have a failure, and (3) a flow of the operation stop control processing when the kill switch 29 is turned off in the state where the ignition switch 28 is ON when either the relay 24 or the heater 25 has a failure will be described.

### [In a Case of (1)]

The flow of the operation stop control processing when the ignition switch 28 is turned off in the state where the kill switch 29 is ON is as follows. In the operation stop control processing, the normal power supply voltage determination unit 31 monitors a voltage of the normal power supply terminal 23A during the operation of the ECM 23 (step S1). Specifically, during the operation of the ECM 23, the normal power supply voltage determination unit 31 repeatedly determines at short intervals whether the normal power supply voltage is supplied to the normal power supply terminal 23A. For example, when the normal power supply voltage is supplied to the normal power supply terminal 23A, the voltage of the normal power supply terminal 23A is at a high level, and when the normal power supply voltage is not supplied to the normal power supply terminal 23A, the voltage of the normal power supply terminal 23A is at a low level. The normal power supply voltage determination unit 31 can determine whether the normal power supply voltage is supplied based on a level of the voltage of the normal power supply terminal 23A.

When the ignition switch 28 is turned off in the state where the kill switch 29 is ON, the normal power supply voltage is not supplied to the normal power supply terminal 23A. In this case, the normal power supply voltage determination unit 31 determines that the normal power supply voltage is not supplied to the normal power supply terminal 23A (step S1: NO).

When the normal power supply voltage determination unit 31 determines that the normal power supply voltage is not supplied to the normal power supply terminal 23A, and then the state signal determination unit 32 determines whether the state signal is output from the heater 25 (step S2). For example, when the state signal is output from the heater 25 to the state detection terminal 23D, a voltage of the state detection terminal 23D is at a high level, and when the state signal is not output from the heater 25 to the state detection terminal 23D, the voltage of the state detection terminal 23D is at a low level. The state signal determination unit 32 can determine whether the state signal is output from the heater 25 based on a level of the voltage of the state detection terminal 23D.

When the ignition switch 28 is turned off in the state where the kill switch 29 is ON, the state signal is not output from the heater 25 to the state detection terminal 23D. In this case, the state signal determination unit 32 determines that the state signal is not output from the heater 25 (step S2: NO).

When the state signal determination unit 32 determines that the state signal is not output from the heater 25, and then the state signal determination unit 32 determines whether the state signal is output from the relay 24 (step S3). Similar as in a method of determining whether the state signal is output from the heater 25, the state signal determination unit 32 can determine whether the state signal is output from the relay 24 based on whether a voltage of the state detection terminal 23C is at a high level or at a low level.

When the ignition switch 28 is turned off in the state where the kill switch 29 is ON, the state signal is not output from the relay 24. In this case, the state signal determination unit 32 determines that the state signal is not output from the relay 24 (step S3: NO).

Thus, when the normal power supply voltage is not supplied to the normal power supply terminal 23A and the state signals are not output from both the heater 25 and the relay 24, in a case where the engine of the straddle-type vehicle 51 is operating at this time, the engine stop control unit 34 stops the engine (step S4), and then, the operation end processing unit 33 executes the operation end processing (step S5). After the end of the operation end processing, the ECM 23 stops. When the ECM 23 stops, the ECM does not operate at all, or is in a labor-saving operating state in which power consumption is prevented as much as possible. When the operation end processing ends, the operation stop control processing ends.

The operation end processing performed by the operation end processing unit 33 is a processing necessary to shift from a state in which the ECM operates to a state in which the ECM does not operate at all or to the labor-saving operating state, and is, for example, a processing of storing a result of the failure determination by the failure determination unit 35 in the memory (nonvolatile memory) of the ECM 23.

### [In a Case of (2)]

The flow of the operation stop control processing when the kill switch 29 is turned off in the state where the ignition switch 28 is ON when the relay 24 and the heater 25 do not have a failure is as follows. When the kill switch 29 is turned off in the state where the ignition switch 28 is ON, the normal power supply voltage is not supplied to the normal power supply terminal 23A similarly as when the ignition switch 28 is turned off in the state where the kill switch 29 is ON. In this case, the normal power supply voltage determination unit 31 determines that the normal power supply voltage is not supplied to the normal power supply terminal 23A (step S1: NO).

When the kill switch 29 is turned off in the state where the ignition switch 28 is ON, the state signal is output from the heater 25 to the state detection terminal 23D, and thus the state signal determination unit 32 determines that the state signal is output from the heater 25 (step S2: YES).

Further, when the kill switch 29 is turned off in the state where the ignition switch 28 is ON, the state signal is output from the relay 24 to the state detection terminal 23C, and thus the state signal determination unit 32 determines that the state signal is output from the relay 24 (step S6: YES).

Thus, when the normal power supply voltage is not supplied to the normal power supply terminal 23A and the state signals are output from both the heater 25 and the relay 24, the engine stop control unit 34 stops the engine (step S7). At this time point, the operation end processing unit 33 does not perform the operation end processing. The operation end processing unit 33 starts time measurement by a timer provided in the ECM 23.

Then, the normal power supply voltage determination unit 31 determines whether the normal power supply voltage is supplied to the normal power supply terminal 23A (step S8). At a present time point, since the kill switch 29 is turned off in a state where the ignition switch 28 is ON, the normal power supply voltage is not supplied to the normal power supply terminal 23A. Thereafter, when the user turns on the kill switch 29 without turning off the ignition switch 28, the normal power supply voltage is supplied to the normal power supply terminal 23A. In this case, the normal power supply voltage determination unit 31 determines that the normal power supply voltage is supplied to the normal power supply terminal 23A (step S8: YES), and returns the operation stop control processing to step S1. As a result, the operation end processing is not executed by the operation end processing unit 33, and therefore the operation stop control processing returns to step S1 without stopping the ECM 23.

On the other hand, when the normal power supply voltage determination unit 31 determines that the normal power supply voltage is not supplied to the normal power supply terminal 23A in step S8 (step S8: NO), and then, based on the timer, the operation end processing unit 33 determines whether a predetermined waiting time elapses from a time point when the normal power supply voltage determination unit 31 determines that the normal power supply voltage is not supplied to the normal power supply terminal 23A in step S1 and the state signal determination unit 32 determines the state signal is output from the heater 25 or the relay 24 in steps S2, S3, or S6 (strictly speaking, a time point when the time measurement is started by the timer) (step S9). When the above waiting time elapses from the time point when the normal power supply voltage determination unit 31 determines that the normal power supply voltage is not supplied to the normal power supply terminal 23A in step S1 and the state signal determination unit 32 determines the state signal is output from the heater 25 or the relay 24 in steps S2, S3, or S6 (step S9: YES), the operation end processing unit 33 executes the operation end processing (step S5). Thus, when the waiting time elapses without turning off the ignition switch 28 after the user turns off the kill switch 29, the operation end processing is executed, and the ECM 23 stops. The waiting time is preferably set to, for example, 10 minutes to 60 minutes. When the user turns off the ignition switch 28 before the waiting time elapses from the time point when the normal power supply voltage determination unit 31 determines that the normal power supply voltage is not supplied to the normal power supply terminal 23A in step S1 and the state signal determination unit 32 determines the state signal is output from the heater 25 or the relay 24 in steps S2, S3, or S6, the operation end processing unit 33 executes the operation end processing to stop the ECM 23.

### [In a Case of (3)]

The flow of the operation stop control processing when the kill switch 29 is turned off in the state where the ignition switch 28 is ON when either the relay 24 or the heater 25 has a failure is as follows. In the case where the relay 24 and the heater 25 do not have a failure, when the kill switch 29 is turned off in the state where the ignition switch 28 is ON, the normal power supply voltage is not supplied to the normal power supply terminal 23A, the state signal is output from the heater 25 to the state detection terminal 23D, and the state signal is output from the relay 24 to the state detection terminal 23C. However, due to a failure of the relay 24, a disconnection of the second path 26B, or the like, the state signal may not be output from the relay 24 to the state detection terminal 23C. In this case, when the kill switch 29 is turned off in the state where the ignition switch 28 is ON, the normal power supply voltage is not supplied to the normal power supply terminal 23A, the state signal is output from the heater 25 to the state detection terminal 23D, and the state signal is not output from the relay 24 to the state detection terminal 23C. In such a state, the normal power supply voltage determination unit 31 determines that the normal power supply voltage is not supplied to the normal power supply terminal 23A (step S1: NO), and then the state signal determination unit 32 determines that the state signal is output from the heater 25 (step S2: YES), and then the state signal determination unit 32 determines that the state signal is not output from the relay 24 (step S6: NO). In this case, the failure determination unit 35 determines that the relay 24 fails (step S10). Thereafter, the processing shifts to step S7.

Due to a failure of the heater 25, a disconnection of the third path 26C, or the like, the state signal may not be output from the heater 25 to the state detection terminal 23D. In this case, when the kill switch 29 is turned off in the state where the ignition switch 28 is ON, the normal power supply voltage is not supplied to the normal power supply terminal 23A, the state signal is not output from the heater 25 to the state detection terminal 23D, and the state signal is output from the relay 24 to the state detection terminal 23C. In such a state, the normal power supply voltage determination unit 31 determines that the normal power supply voltage is not supplied to the normal power supply terminal 23A (step S1: NO), and then the state signal determination unit 32 determines that the state signal is not output from the heater 25 (step S2: NO), and then the state signal determination unit 32 determines that the state signal is output from the relay 24 (step S3: YES). In this case, the failure determination unit 35 determines that the heater 25 fails (step S11). Thereafter, the processing shifts to step S7.

### (Switch Discrimination Method)

The switch discrimination method according to the Example of the present invention is applied to the operation stop control device 30. This switch discrimination method is a method that discriminates between the ignition switch 28 being OFF and the kill switch 29 being OFF. The switch discrimination method of the present example includes a normal power supply voltage determination step (voltage determination step) of determining whether the normal power supply voltage is supplied to the normal power supply terminal 23A; and a state signal determination step of determining whether the state signal is output from at least one of the relay 24 and the heater 25, and based on determination results in the normal power supply voltage determination step and the state signal determination step, determines that the ignition switch 28 is turned off when the normal power supply voltage is not supplied to the normal power supply terminal 23A and the state signal is not output from both the relay 24 and the heater 25, and determines that the kill switch 29 is turned off in the state where the ignition switch 28 is ON when the normal power supply voltage is not supplied to the normal power supply terminal 23A and the state signal is output from at least one of the relay 24 and the heater 25.

In Fig. 4, step S1 corresponds to the normal power supply voltage determination step, and steps S2, S3, and S6 correspond to the state signal determination step. Steps S4 and S5 can be considered as processing executed in accordance with a determination that the ignition switch 28 is turned off. Processing of steps S7 to S9 can be considered as processing executed in accordance with a determination that the kill switch 29 is turned off in the state where the ignition switch 28 is ON.

As described above, in the electrical system for a straddle-type vehicle 21 of the present example, when the ignition switch 28 is turned off in the state where the kill switch 29 is ON, as a result, the normal power supply voltage is not supplied to the normal power supply terminal 23A and the state signals are not output from both the relay 24 and the heater 25, the operation stop control device 30 of the present example recognizes this state by the normal power supply voltage determination unit 31 and the state signal determination unit 32, executes the operation end processing by the operation end processing unit 33, and stops the ECM 23. When the kill switch 29 is turned off in the state where the ignition switch 28 is ON, as a result, the normal power supply voltage is not supplied to the normal power supply terminal 23A and the state signal is output from at least one of the relay 24 and the heater 25, the operation stop control device 30 recognizes this state by the normal power supply voltage determination unit 31 and the state signal determination unit 32, and causes an execution of the operation end processing to wait for the predetermined waiting time. Then, when the kill switch 29 is turned on before the waiting time elapses, the ECM 23 is not stopped. Thus, according to the electrical system for a straddle-type vehicle 21 or the operation stop control device 30 of the present example, it is possible to discriminate between the ignition switch 28 being OFF and the kill switch 29 being OFF, and stop the ECM 23 when the ignition switch 28 is turned off, not immediately stop the operation of the ECM 23 when the kill switch 29 is turned off in the state where the ignition switch 28 ON, and then, prevent the ECM 23 from stopping when the kill switch 29 is turned on within the waiting time. Therefore, the ECM 23 is provided with a failure diagnosis function (OBD), and this failure diagnosis function includes a self-diagnosis function in which the ECM 23 diagnoses a failure by itself. When the self-diagnosis function includes a function of counting and recording the number of times of travel of the straddle-type vehicle 51 and the number of times of self-diagnosis, it is possible to prevent turn-off of the kill switch 29 from being counted as the number of times of travel in the self-diagnosis function. Therefore, it is possible to solve the above problem that accuracy or reliability of a safety evaluation of the straddle-type vehicle by a failure diagnosis rate is reduced due to a variation in the failure diagnosis rate.

As shown in Fig. 2, in the electrical system for a straddle-type vehicle 21, the ignition switch 28 and the kill switch 29 are connected to the normal power supply terminal 23A of the ECM 23 in series to the each other. Thus, according to the electrical system for a straddle-type vehicle 21 or the operation stop control device 30 of the present example, even in a configuration in which the ignition switch 28 and the kill switch 29 are connected to a common terminal of the ECM 23 in series to the each other, by the operation stop control processing in the operation stop control device 30, it is possible to discriminate between the ignition switch 28 being OFF and the kill switch 29 being OFF, and stop the ECM 23 when the ignition switch 28 is turned off, not immediately stop the operation of the ECM 23 when the kill switch 29 is turned off in the state where the ignition switch 28 ON, and then, prevent the ECM 23 from stopping when the kill switch 29 is turned on within the waiting time.

When the predetermined waiting time elapses from the time point when the normal power supply voltage determination unit 31 determines that the normal power supply voltage is not supplied to the normal power supply terminal 23A in Fig. 2 in step S1 and the state signal determination unit 32 determines the state signal is output from the heater 25 or the relay 24 in steps S2, S3, or S6, the operation stop control device 30 executes the operation end processing to stop the ECM 23. Accordingly, the ECM 23 can be stopped when the predetermined waiting time elapses from the time point when the kill switch 29 is turned off in the state where the ignition switch 28 is ON. In an emergency, the user turns off the kill switch 29 without turning off the ignition switch 28 in order to quickly stop the engine. After turning off the kill switch 29, the user may not be able to turn off the ignition switch 28 by following various types of processing in the emergency, and may forget to turn off the ignition switch 28 for an unstable mental state in the emergency. In such a case, power consumption of the battery 22 can be prevented by stopping the ECM 23 after the predetermined waiting time elapses.

When the normal power supply voltage is not supplied to the normal power supply terminal 23A and the state signal is output from one of the relay 24 and the heater 25, the operation stop control device 30 does not immediately stop the ECM 23, and then does not stop the ECM 23 when the kill switch 29 is turned on within the waiting time. According to this configuration, even when either the relay 24 or the heater 25 fails, it is possible to discriminate between the ignition switch 28 being OFF and the kill switch 29 being OFF in the state where the ignition switch 28 is ON, and when the kill switch 29 is turned off in the state where the ignition switch 28 is ON, it is possible to prevent the operation of the ECM 23 from being immediately stopped.

In the above Example, the relay 24 and the heater 25 are described as examples of the electrical device, but the electrical device may be another device that operates by electric power, and may be, for example, a sensor, an electric motor, an electric actuator, an instrument, a light, an integrated circuit (including another ECM), or the like. The present invention can also be applied to an electrical system for a straddle-type vehicle having an ECM having the ignition switch and the kill switch connected in series to the each other and one electrical device, or can also be applied to an electrical system for a straddle-type vehicle having an ECM having the ignition switch and the kill switch connected in series to the each other and three or more electrical devices.

In the above Example, a case where the operation end processing is executed and the ECM 23 is stopped when the predetermined waiting time elapses from the time point when the normal power supply voltage determination unit 31 determines that the normal power supply voltage is not supplied to the normal power supply terminal 23A and the state signal determination unit 32 determines the state signal is output from the heater 25 or the relay 24 is described as an example, but in a case where the normal power supply voltage determination unit 31 determines that the normal power supply voltage is not supplied to the normal power supply terminal 23A and the state signal determination unit 32 determines that the state signal is output from the heater 25 or the relay 24, until the ignition switch is turned off thereafter, the operation end processing may not be executed, and the operation of the ECM 23 may be continued.

The present invention can be applied to various types of straddle-type vehicles such as a motorcycle, a motor tricycle, a scooter, and a buggy vehicle. The straddle-type vehicle to which the present invention can be applied is not limited to the straddle-type vehicle shown in Fig. 3. An arrangement of the ignition switch and the kill switch in the straddle-type vehicle is not limited to an arrangement shown in Fig. 3.

### REFERENCE SIGNS LIST

1, 21: electrical system for straddle-type vehicle
2: power supply device
3A, 23A: normal power supply terminal
3B, 23B: constant power supply terminal
4: electrical device
5, 26: normal power supply voltage supply circuit
5A, 26A: first path
5B, 26B: second path
6, 27: constant power supply voltage supply circuit
7, 28: ignition switch
8, 29: kill switch
9, 30: operation stop control device
10, 31: normal power supply voltage determination unit
11, 32: state signal determination unit
12, 33: operation end processing unit
22: battery (power supply device)
23: ECM (control device)
24: relay (electrical device)
25: heater (electrical device)
51: straddle-type vehicle

## Claims

1. An electrical system for a straddle-type vehicle (1, 21) comprising:
a power supply device (2, 22) that outputs a normal power supply voltage and a constant power supply voltage;
a control device (3, 23) that includes a normal power supply terminal (3A, 23A) to which the normal power supply voltage is supplied and a constant power supply terminal (3B, 23B) to which the constant power supply voltage is supplied, operates by the normal power supply voltage while the normal power supply voltage is supplied to the normal power supply terminal (3A, 23A), and that operates by the constant power supply voltage while the normal power supply voltage is not supplied to the normal power supply terminal (3A, 23A);
an electrical device (4, 24, 25) that operates by the normal power supply voltage while the normal power supply voltage is supplied to the electrical device (4, 24, 25), that stops while the normal power supply voltage is not supplied to the electrical device (4, 24, 25), and that outputs a state signal, indicating that the normal power supply voltage is supplied to the electrical device (4, 24, 25), to the control device (3, 23) while the normal power supply voltage is supplied to the electrical device (4, 24, 25);
a normal power supply circuit (5, 26) that has a first path (5A, 26A) and a second path (5B, 26B) connected to the power supply device (2, 22) in parallel to each other, that supplies the normal power supply voltage output from the power supply device (2, 22) to the normal power supply terminal (3A, 23A) of the control device (3, 23) via the first path (5A, 26A), and that supplies the normal power supply voltage output from the power supply device (2, 22) to the electrical device (4, 24, 25) via the second path (5B, 26B);
a constant power supply circuit (6, 27) that is connected to the power supply device (2, 22) and that supplies the constant power supply voltage output from the power supply device (2, 22) to the constant power supply terminal (3B, 23B) of the control device (3, 23);
an ignition switch (7, 28) that is provided between the power supply device (2, 22) and the normal power supply circuit (5, 26), and that switches ON and OFF of supply of the normal power supply voltage supplied from the power supply device (2, 22) to the normal power supply circuit (5, 26); and
a kill switch (8, 29) that is provided in the first path (5A, 26A) and that turn off supply of the normal power supply voltage supplied from the power supply device (2, 22) to the normal power supply terminal (3A, 23A) of the control device (3, 23) by disconnecting the first path (5A, 26A) so that an engine of a straddle-type vehicle (51) stops in an emergency, wherein
the control device (3, 23) includes:
a voltage determination unit (10, 31) that determines whether the normal power supply voltage is supplied to the normal power supply terminal (3A, 23A);
a state signal determination unit (11, 32) that determines whether the state signal is output from the electrical device (4, 24, 25); and
an operation end processing unit (12, 33) that performs an operation end processing of ending an operation of the control device (3, 23), and
based on determination results by the voltage determination unit (10, 31) and the state signal determination unit (11, 32), the operation end processing unit (12, 33) performs the operation end processing when the normal power supply voltage is not supplied to the normal power supply terminal (3A, 23A) and the state signal is not output from the electrical device (4, 24, 25), and does not perform the operation end processing when the normal power supply voltage is not supplied to the normal power supply terminal (3A, 23A) and the state signal is output from the electrical device (4, 24, 25).

2. A switch discrimination method that discriminates between an ignition switch (7, 28) being OFF and a kill switch (8, 29) being OFF in an electrical system for a straddle-type vehicle (1, 21), the electrical system for the straddle-type vehicle (1, 21) including:
a power supply device (2, 22) that outputs a normal power supply voltage and a constant power supply voltage;
a control device (3, 23) that includes a normal power supply terminal (3A, 23A) to which the normal power supply voltage is supplied and a constant power supply terminal (3B, 23B) to which the constant power supply voltage is supplied, that operates by the normal power supply voltage while the normal power supply voltage is supplied to the normal power supply terminal (3A, 23A), and that operates by the constant power supply voltage while the normal power supply voltage is not supplied to the normal power supply terminal (3A, 23A);
an electrical device (4, 24, 25) that operates by the normal power supply voltage while the normal power supply voltage is supplied to the electrical device (4, 24, 25), that stops while the normal power supply voltage is not supplied to the electrical device (4, 24, 25), and that outputs a state signal, indicating that the normal power supply voltage is supplied to the electrical device (4, 24, 25), to the control device (3, 23) while the normal power supply voltage is supplied to the electrical device (4, 24, 25);
a normal power supply circuit (5, 26) that has a first path (5A, 26A) and a second path (5B, 26B) connected to the power supply device (2, 22) in parallel to each other, that supplies the normal power supply voltage output from the power supply device (2, 22) to the normal power supply terminal (3A, 23A) of the control device (3, 23) via the first path (5A, 26A), and that supplies the normal power supply voltage output from the power supply device (2, 22) to the electrical device (4, 24, 25) via the second path (5B, 26B);
a constant power supply circuit (6, 27) that is connected to the power supply device (2, 22) and that supplies the constant power supply voltage output from the power supply device to the constant power supply terminal (3B, 23B) of the control device (3, 23);
the ignition switch (7, 28) that is provided between the power supply device (2, 22) and the normal power supply circuit (5, 26), and that switches ON and OFF of supply of the normal power supply voltage supplied from the power supply device (2, 22) to the normal power supply circuit (5, 26); and
the kill switch (8, 29) that is provided in the first path (5A, 26A) and that turns off supply of the normal power supply voltage supplied from the power supply device (2, 22) to the normal power supply terminal (3A, 23A) of the control device (3, 23) by disconnecting the first path (5A, 26A) so that an engine of a straddle-type vehicle (51) stops in an emergency, the switch discrimination method comprising:
a voltage determination step of determining whether the normal power supply voltage is supplied to the normal power supply terminal (3A, 23A); and
a state signal determination step of determining whether the state signal is output from the electrical device (4, 24, 25), and
based on determination results in the voltage determination step and the state signal determination step, determining that the ignition switch (7, 28) is turned off when the normal power supply voltage is not supplied to the normal power supply terminal (3A, 23A) and the state signal is not output from the electrical device (4, 24, 25), and determining that the kill switch (8, 29) is turned off in a state where the ignition switch (7, 28) is ON when the normal power supply voltage is not supplied to the normal power supply terminal (3A, 23A) and the state signal is output from the electrical device (4, 24, 25).

## Patentansprüche

1. Elektrisches System für ein Rollerfahrzeug (1, 21), Folgendes umfassend:
eine Energieversorgungseinrichtung (2, 22), die eine normale Energieversorgungsspannung und eine konstante Energieversorgungsspannung ausgibt;
eine Steuervorrichtung (3, 23), die einen normalen Leistungsversorgungsanschluss (3A, 23A), dem die normale Leistungsversorgungsspannung zugeführt wird, und einen konstanten Leistungsversorgungsanschluss (3B, 23B), dem die konstante Leistungsversorgungsspannung zugeführt wird, umfasst,
der mit der normalen Leistungsversorgungsspannung arbeitet, während die normale Leistungsversorgungsspannung dem normalen Leistungsversorgungsanschluss (3A, 23A) zugeführt wird, und die mit der konstanten Leistungsversorgungsspannung arbeitet,
während die normale Leistungsversorgungsspannung nicht dem normalen Leistungsversorgungsanschluss (3A, 23A) zugeführt wird;
ein elektrisches Gerät (4, 24, 25), das mit der normalen Versorgungsspannung arbeitet, während die normale Versorgungsspannung dem elektrischen Gerät (4, 24, 25) zugeführt wird, das anhält, während die normale Versorgungsspannung dem elektrischen Gerät (4, 24, 25) nicht zugeführt wird, und das ein Zustandssignal, das anzeigt, dass die normale Versorgungsspannung dem elektrischen Gerät (4, 24, 25) zugeführt wird, an das Steuergerät (3, 23) ausgibt, während die normale Versorgungsspannung dem elektrischen Gerät (4, 24, 25) zugeführt wird;
eine normale Stromversorgungsschaltung (5, 26), die einen ersten Pfad (5A, 26A) und einen zweiten Pfad (5B, 26B) aufweist, die parallel zueinander mit der Stromversorgungseinrichtung (2, 22) verbunden sind, die die normale Versorgungsspannung, die von der Stromversorgungseinrichtung (2, 22) ausgegeben wird, über den ersten Pfad (5A, 26A) an den normalen Versorgungsklemmen (3A, 23A) der Steuervorrichtung (3, 23) zuführt und die die normale Versorgungsspannung, die von der Stromversorgungseinrichtung (2, 22) ausgegeben wird, über den zweiten Pfad (5B, 26B) an das elektrische Gerät (4, 24, 25) zuführt;
eine mit der Energieversorgungseinrichtung (2, 22) verbundene Konstantstromversorgungsschaltung (6, 27), die von der Energieversorgungseinrichtung (2, 22) abgegebene Konstantstromversorgungsspannung dem Konstantstromversorgungsanschluss (3B, 23B) der Steuereinrichtung (3, 23) zuführt;
einen Zündschalter (7, 28), der zwischen der Energieversorgungseinrichtung (2, 22) und der normalen Energieversorgungsschaltung (5, 26) bereitgestellt ist und die Versorgung der normalen Energieversorgungsspannung, die von der Energieversorgungseinrichtung (2, 22) an die normale Energieversorgungsschaltung (5, 26) zugeführt wird, ein- und ausschaltet; und
einen Tötungsschalter (8, 29), der in dem ersten Pfad (5A, 26A) bereitgestellt ist und die Versorgung der normalen Versorgungsspannung, die von der Energieversorgungseinrichtung (2, 22) zu dem normalen Energieversorgungsanschluss (3A, 23A) der Steuereinrichtung (3, 23) zugeführt wird, durch Trennen des ersten Pfades (5A, 26A) abschaltet, sodass ein Motor eines Spreizfahrzeugs (51) im Notfall stoppt, wobei
die Steuereinrichtung (3, 23) Folgendes beinhaltet:
eine Spannungsbestimmungseinheit (10, 31), die bestimmt, ob die normale Energieversorgungsspannung dem normalen Energieversorgungsanschluss (3A, 23A) zugeführt wird;
eine Zustandssignalbestimmungseinheit (11, 32), die bestimmt, ob das Zustandssignal von der elektrischen Vorrichtung (4, 24, 25) ausgegeben wird; und
eine Bearbeitungsendverarbeitungseinheit (12, 33), die eine Bearbeitungsendverarbeitung zum Beenden eines Betriebs der Steuereinrichtung (3, 23) durchführt, und
basierend auf Ermittlungsergebnissen durch die Spannungsbestimmungseinheit (10, 31) und die Zustandssignalbestimmungseinheit (11, 32), die Betriebsendverarbeitungseinheit (12, 33) die Betriebsendverarbeitung durchführt, wenn die normale Versorgungsspannung nicht dem normalen Energieversorgungsanschluss (3A, 23A) zugeführt wird und das Zustandssignal nicht von der elektrischen Einrichtung (4, 24, 25) ausgegeben wird, und die Betriebsendverarbeitung nicht durchführt, wenn die normale Versorgungsspannung nicht dem normalen Energieversorgungsanschluss (3A, 23A) zugeführt wird und das Zustandssignal von der elektrischen Einrichtung (4, 24, 25) ausgegeben wird.

2. Schalterunterscheidungsverfahren, das unterscheidet zwischen einem Zündungsschalter (7, 28), der AUS ist, und einem Tötungsschalter (8, 29), der AUS ist, in einem elektrischen System für ein Spreizfahrzeug (1, 21), wobei das elektrische System für das Spreizfahrzeug (1, 21) umfasst:
eine Energieversorgungseinrichtung (2, 22), die eine normale Energieversorgungsspannung und eine konstante Energieversorgungsspannung ausgibt;
eine Steuervorrichtung (3, 23), die einen normalen Leistungsversorgungsanschluss (3A, 23A), dem die normale Leistungsversorgungsspannung zugeführt wird, und einen konstanten Leistungsversorgungsanschluss (3B, 23B), dem die konstante Leistungsversorgungsspannung zugeführt wird, umfasst, der mit der normalen Leistungsversorgungsspannung arbeitet, während die normale Leistungsversorgungsspannung dem normalen Leistungsversorgungsanschluss (3A, 23A) zugeführt wird, und die mit der konstanten Leistungsversorgungsspannung arbeitet, während die normale Leistungsversorgungsspannung nicht dem normalen Leistungsversorgungsanschluss (3A, 23A) zugeführt wird;
ein elektrisches Gerät (4, 24, 25), das mit der normalen Versorgungsspannung arbeitet, während die normale Versorgungsspannung dem elektrischen Gerät (4, 24, 25) zugeführt wird, das anhält, während die normale Versorgungsspannung dem elektrischen Gerät (4, 24, 25) nicht zugeführt wird, und das ein Zustandssignal, das anzeigt, dass die normale Versorgungsspannung dem elektrischen Gerät (4, 24, 25) zugeführt wird, an das Steuergerät (3, 23) ausgibt, während die normale Versorgungsspannung dem elektrischen Gerät (4, 24, 25) zugeführt wird;
eine normale Stromversorgungsschaltung (5, 26), die einen ersten Pfad (5A, 26A) und einen zweiten Pfad (5B, 26B) aufweist, die parallel zueinander mit der Stromversorgungseinrichtung (2, 22) verbunden sind, die die normale Versorgungsspannung, die von der Stromversorgungseinrichtung (2, 22) ausgegeben wird, über den ersten Pfad (5A, 26A) an den normalen Versorgungsklemmen (3A, 23A) der Steuervorrichtung (3, 23) zuführt und die die normale Versorgungsspannung, die von der Stromversorgungseinrichtung (2, 22) ausgegeben wird, über den zweiten Pfad (5B, 26B) an das elektrische Gerät (4, 24, 25) zuführt;
eine konstante Stromversorgungsschaltung (6, 27), die mit der Stromversorgungseinrichtung (2, 22) verbunden ist und die konstante Versorgungsspannung, die von der Stromversorgungseinrichtung ausgegeben wird, an den konstanten Versorgungsklemmen (3B, 23B) der Steuervorrichtung (3, 23) zuführt;
der Zündschalter (7, 28), der zwischen dem Stromversorgungsgerät (2, 22) und der normalen Stromversorgungsschaltung (5, 26) angeordnet ist und das Ein- und Ausschalten der Versorgung der normalen Versorgungsspannung, die vom Stromversorgungsgerät (2, 22) an die normale Stromversorgungsschaltung (5, 26) geliefert wird, steuert; und
einen Tötungsschalter (8, 29), der in dem ersten Pfad (5A, 26A) bereitgestellt ist und die Versorgung der normalen Versorgungsspannung, die von der Energieversorgungseinrichtung (2, 22) dem normalen Energieversorgungsanschluss (3A, 23A) der Steuereinrichtung (3, 23) zugeführt wird, durch Trennen des ersten Pfades (5A, 26A) abschaltet, sodass ein Motor eines Spreizfahrzeugs (51) im Notfall stoppt, wobei das Schalterunterscheidungsverfahren ferner Folgendes umfasst:
einen Spannungsbestimmungsschritt zum Bestimmen, ob die normale Energieversorgungsspannung dem normalen Energieversorgungsanschluss (3A, 23A) zugeführt wird; und
einen Zustandssignalerfassungs-Schritt zum Bestimmen, ob das Zustandssignal von der elektrischen Vorrichtung (4, 24, 25) ausgegeben wird, und
auf der Grundlage von Ermittlungsergebnissen im Spannungsbestimmungsschritt und dem Zustandssignalbestimmungsschritt, Bestimmen, dass der Zündschalter (7, 28) ausgeschaltet ist, wenn die normale Versorgungsspannung nicht dem normalen Energieversorgungsanschluss (3A, 23A) zugeführt wird und das Zustandssignal nicht von dem elektrischen Gerät (4, 24, 25) ausgegeben wird, und Bestimmen, dass der Abbruchschalter (8, 29) ausgeschaltet ist in einem Zustand, in dem der Zündschalter (7, 28) eingeschaltet ist, wenn die normale Versorgungsspannung nicht dem normalen Energieversorgungsanschluss (3A, 23A) zugeführt wird und das Zustandssignal von dem elektrischen Gerät (4, 24, 25) ausgegeben wird.

## Revendications

1. Système électrique pour un véhicule de type à enfourcher (1, 21) comprenant :
un dispositif d'alimentation électrique (2, 22) qui délivre une tension d'alimentation électrique normale et une tension d'alimentation électrique constante ;
un dispositif de commande (3, 23) qui comprend une borne d'alimentation électrique normale (3A, 23A) à laquelle est fournie la tension d'alimentation électrique normale et une borne d'alimentation électrique constante (3B, 23B) à laquelle est fournie la tension d'alimentation électrique constante, qui fonctionne avec la tension d'alimentation électrique normale pendant que la tension d'alimentation électrique normale est fournie à la borne d'alimentation électrique normale (3A, 23A),
et qui fonctionne avec la tension d'alimentation électrique constante pendant que la tension d'alimentation électrique normale n'est pas fournie à la borne d'alimentation électrique normale (3A, 23A) ;
un dispositif électrique (4, 24, 25) qui fonctionne avec la tension d'alimentation normale pendant que la tension d'alimentation normale est fournie au dispositif électrique (4, 24, 25), qui s'arrête pendant que la tension d'alimentation normale n'est pas fournie au dispositif électrique (4, 24, 25),
et qui délivre un signal d'état, indiquant que la tension d'alimentation normale est fournie au dispositif électrique (4, 24, 25), au dispositif de commande (3, 23) pendant que la tension d'alimentation normale est fournie au dispositif électrique (4, 24, 25) ;
un circuit d'alimentation électrique normale (5, 26) qui comporte un premier chemin (5A, 26A) et un second chemin (5B, 26B) connectés au dispositif d'alimentation électrique (2, 22) en parallèle l'un à l'autre, qui fournit la tension d'alimentation électrique normale délivrée par le dispositif d'alimentation électrique (2, 22) à la borne d'alimentation électrique normale (3A, 23A) du dispositif de commande (3, 23) via le premier chemin (5A, 26A), et qui fournit la tension d'alimentation électrique normale délivrée par le dispositif d'alimentation électrique (2, 22) au dispositif électrique (4, 24, 25) via le second chemin (5B, 26B) ;
un circuit d'alimentation électrique constante (6, 27) qui est connecté au dispositif d'alimentation électrique (2, 22) et qui fournit la tension d'alimentation électrique constante délivrée par le dispositif d'alimentation électrique (2, 22) à la borne d'alimentation électrique constante (3B, 23B) du dispositif de commande (3, 23) ;
un interrupteur d'allumage (7, 28) qui est prévu entre le dispositif d'alimentation électrique (2, 22) et le circuit d'alimentation électrique normale (5, 26), et qui commute sur MARCHE et ARRÊT l'alimentation de la tension d'alimentation électrique normale délivrée par le dispositif d'alimentation électrique (2, 22) au circuit d'alimentation électrique normale (5, 26) ; et
un coupe-circuit (8, 29) qui est prévu dans le premier chemin (5A, 26A) et qui coupe l'alimentation de la tension d'alimentation normale délivrée par le dispositif d'alimentation (2, 22) à la borne d'alimentation normale (3A, 23A) du dispositif de commande (3, 23) en déconnectant le premier chemin (5A, 26A) de sorte qu'un moteur d'un véhicule de type à enfourcher (51) s'arrête en cas d'urgence, dans lequel
le dispositif de commande (3, 23) comprend :
une unité de détermination de tension (10, 31) qui détermine si la tension d'alimentation électrique normale est fournie à la borne d'alimentation électrique normale (3A, 23A) ;
une unité de détermination de signal d'état (11, 32) qui détermine si le signal d'état est émis par le dispositif électrique (4, 24, 25) ; et
une unité de traitement de fin d'opération (12, 33) qui effectue un traitement de fin d'opération consistant à terminer une opération du dispositif de commande (3, 23), et
sur la base des résultats de détermination par l'unité de détermination de tension (10, 31) et l'unité de détermination de signal d'état (11, 32), l'unité de traitement de fin d'opération (12, 33) effectue le traitement de fin d'opération lorsque la tension d'alimentation normale n'est pas fournie à la borne d'alimentation normale (3A, 23A) et le signal d'état n'est pas émis par le dispositif électrique (4, 24, 25), et
n'effectue pas le traitement de fin d'opération lorsque la tension d'alimentation normale n'est pas fournie à la borne d'alimentation normale (3A, 23A) et le signal d'état est émis par le dispositif électrique (4, 24, 25).

2. Procédé de discrimination de commutation qui fait la distinction entre un commutateur d'allumage (7, 28) qui est sur OFF et un coupe-circuit (8, 29) qui est sur OFF dans un système électrique pour un véhicule de type à enfourcher (1, 21), le système électrique pour le véhicule de type à enfourcher (1, 21) comprenant :
un dispositif d'alimentation électrique (2, 22) qui délivre une tension d'alimentation électrique normale et une tension d'alimentation électrique constante ;
un dispositif de commande (3, 23) qui comprend une borne d'alimentation électrique normale (3A, 23A) à laquelle est fournie la tension d'alimentation électrique normale et une borne d'alimentation électrique constante (3B, 23B) à laquelle est fournie la tension d'alimentation électrique constante, qui fonctionne avec la tension d'alimentation électrique normale pendant que la tension d'alimentation électrique normale est fournie à la borne d'alimentation électrique normale (3A, 23A),
et qui fonctionne avec la tension d'alimentation électrique constante pendant que la tension d'alimentation électrique normale n'est pas fournie à la borne d'alimentation électrique normale (3A, 23A) ;
un dispositif électrique (4, 24, 25) qui fonctionne avec la tension d'alimentation normale pendant que la tension d'alimentation normale est fournie au dispositif électrique (4, 24, 25), qui s'arrête pendant que la tension d'alimentation normale n'est pas fournie au dispositif électrique (4, 24, 25),
et qui délivre un signal d'état, indiquant que la tension d'alimentation normale est fournie au dispositif électrique (4, 24, 25), au dispositif de commande (3, 23) pendant que la tension d'alimentation normale est fournie au dispositif électrique (4, 24, 25) ;
un circuit d'alimentation électrique normale (5, 26) qui comporte un premier chemin (5A, 26A) et un second chemin (5B, 26B) connectés au dispositif d'alimentation électrique (2, 22) en parallèle l'un à l'autre, qui fournit la tension d'alimentation électrique normale délivrée par le dispositif d'alimentation électrique (2, 22) à la borne d'alimentation électrique normale (3A, 23A) du dispositif de commande (3, 23) via le premier chemin (5A, 26A), et qui fournit la tension d'alimentation électrique normale délivrée par le dispositif d'alimentation électrique (2, 22) au dispositif électrique (4, 24, 25) via le second chemin (5B, 26B) ;
un circuit d'alimentation électrique constante (6, 27) qui est connecté au dispositif d'alimentation électrique (2, 22) et qui fournit la tension d'alimentation électrique constante délivrée par le dispositif d'alimentation électrique à la borne d'alimentation électrique constante (3B, 23B) du dispositif de commande (3, 23) ;
l'interrupteur d'allumage (7, 28) qui est prévu entre le dispositif d'alimentation électrique (2, 22) et le circuit d'alimentation électrique normale (5, 26), et qui commute sur MARCHE et ARRÊT l'alimentation de la tension d'alimentation électrique normale fournie par le dispositif d'alimentation électrique (2, 22) au circuit d'alimentation électrique normale (5, 26) ; et
le coupe-circuit (8, 29) qui est prévu dans le premier chemin (5A, 26A) et qui coupe l'alimentation de la tension d'alimentation normale fournie par le dispositif d'alimentation (2, 22) à la borne d'alimentation normale (3A, 23A) du dispositif de commande (3, 23) en déconnectant le premier chemin (5A, 26A) de sorte qu'un moteur d'un véhicule de type à enfourcher (51) s'arrête en cas d'urgence, le procédé de discrimination de commutation comprenant :
une étape de détermination de tension consistant à déterminer si la tension d'alimentation normale est fournie à la borne d'alimentation normale (3A, 23A) ; et
une unité de détermination de signal d'état qui détermine si le signal d'état est émis par le dispositif électrique (4, 24, 25) ; et
sur la base des résultats de détermination dans l'étape de détermination de tension et l'étape de détermination de signal d'état, la détermination que le commutateur d'allumage (7, 28) est éteint lorsque la tension d'alimentation électrique normale n'est pas fournie à la borne d'alimentation électrique normale (3A, 23A) et le signal d'état n'est pas émis par le dispositif électrique (4, 24, 25), et la détermination que le coupe-circuit (8, 29) est éteint dans un état où le commutateur d'allumage (7, 28) est allumé lorsque la tension d'alimentation électrique normale n'est pas fournie à la borne d'alimentation électrique normale (3A, 23A) et le signal d'état est émis par le dispositif électrique (4, 24, 25).
